# EUROPEAN PATENT SPECIFICATION

(11) **EP 3 434 244 B1**
(45) Date of publication and mention of the grant of the patent: **26.02.2020**
(21) Application number: 17201745.1
(22) Date of filing: 14.11.2017
(51) Int. Cl.: A61G 5/04

(54) **AUXILIARY POWER DEVICE AND WHEELCHAIR**
HILFSANTRIEBSVORRICHTUNG UND ROLLSTUHL
DISPOSITIF D'ALIMENTATION AUXILIAIRE ET FAUTEUIL ROULANT

(30) Priority: 24.07.2017 TW 106124763
(43) Date of publication of application: 30.01.2019
(73) Proprietor: Li Yuan Transmission Co., Ltd., Nantou County (TW)
(72) Inventor: Tang, Han-Wei, Nantou County (TW); Ko, Keng-Yu, Nantou County (TW); Tseng, Chuan-Yu, Nantou County (TW)
(74) Representative: Lang, Christian

(56) References cited:
- EP-A1- 0 625 434
- EP-A1- 0 770 371
- WO-A1-96/15000
- JP-A- H10 127 700
- US-A1- 2015 224 823

## Description

### BACKGROUND

### 1. Technical Field

The present invention relates to an auxiliary power device and, more particularly, to an auxiliary power device and a wheelchair including the auxiliary power device for automatically moving back on the right track when deviation occurs.

### 2. Description of the Related Art

Wheelchairs are a movement aid particularly useful for people who cannot use their lower limbs (or legs) to walk smoothly. A conventional wheelchair generally relies on a user to apply forces to move the wheelchair forward or rearward. Specifically, the user grips and applies forward or rearward forces on two auxiliary rings respectively outward of two wheels of the wheelchair with both hands. The forces acting on the auxiliary rings rotate the wheels and, thus, move the wheelchair.

However, the above approach completely relies on manpower and, thus, consumes considerable physical strength. Many users are old people or patients whose hands could be too weak to grip and push the auxiliary rings for moving the wheelchair for a long time. Furthermore, the gesture for gipping the auxiliary rings requires the user to open the arms sideways and apply a downward and outward force which is not ergonomic, and the arms lack supporting points, which could result in fatigue of the upper limbs after long-term pushing of the wheelchair. Furthermore, if the user directly applies forces on the wheels, the operation is even more laborious, failing to maximize the force application for labor-saving purposes, which is more obvious on an uphill slope.

Thus, improvement to the conventional wheelchairs is necessary.

Patent application publication JP H10127700 A discloses a wheel chair with an auxiliary drive being pivotably mounted below the seat of the wheel chair. The auxiliary drive comprises a driving wheel and an electric motor for driving the driving wheel.

From patent application publication EP 0625434 A1 a caster wheel assembly for a trolley is known. The wheel assembly has a wheel that is forced by a biasing arrangement into an orientation corresponding to a direct forward movement of the trolley. The biasing arrangement comprises an annular bearing element having a lower cam surface and comprises further a cam follower and two planet wheels mounted on the cam follower.

### SUMMARY

To solve the above problem, an objective of the present invention is to provide an auxiliary power device for a wheel chair providing auxiliary movement while automatically guiding a wheelchair back on the right track when deviation occurs during forward movement of the wheelchair.

Another objective of the present invention is to provide a wheel chair including an auxiliary power device providing auxiliary movement while automatically guiding a wheelchair back on the right track when deviation occurs during forward movement of the wheelchair.

When the terms "front", "rear", "up", "top", "down", "bottom", "inner", "outer", "side", and similar terms are used herein, it should be understood that these terms have reference only to the structure shown in the drawings as it would appear to a person viewing the drawings and are utilized only to facilitate describing the invention, rather than restricting the invention.

An auxiliary power device for a wheel chair according to the present invention has the features of claim 1. Further embodiments are subject-matter of the dependent claims. The auxiliary power device for a wheel chair comprises a connecting unit including a base and a central shaft rotatably mounted to the base and rotatable about a rotating axis. The connecting unit further includes a guiding portion disposed on a bottom side of the base and spaced from the rotating axis in a direction perpendicular to the rotating axis. The base is adapted to be connected to a wheelchair. The auxiliary power device further comprises an auxiliary unit including a wheel bracket and an auxiliary wheel. The wheel bracket is pivotably connected to the connecting unit. The auxiliary wheel is rotatably mounted to the wheel bracket and a power element is mounted in the auxiliary wheel. The auxiliary wheel is movable on a ground in a moving direction in which the wheelchair moves. The power element is configured to drive the auxiliary wheel to rotate relative to the wheel bracket and to move the auxiliary wheel on the ground in the moving direction. The auxiliary unit further includes a rotary member abutting the guiding portion. When the auxiliary wheel deviates from the moving direction while moving on the ground, the wheel bracket and the central shaft together rotate about the rotating axis of the central shaft, the rotary member moves along and presses against the guiding portion, and the auxiliary wheel is imparted with a returning force to move back to the moving direction.

The present invention also provides a wheelchair including the auxiliary power device.

The auxiliary wheel assists in movement of the wheelchair. When turning or moving on a bumpy road, the auxiliary wheel is imparted with the returning force to move back on the right track, such that the wheelchair can move along a straight line, automatically moving the wheelchair back on the right track.

In an example, the central shaft of the connecting unit includes a first pivotal hole, the wheel bracket of the auxiliary unit includes a second pivotal hole, and a pivotal member extends through the first pivotal hole of the central shaft and the second pivotal hole of the wheel bracket to connect the central shaft and the wheel bracket.

In an example, the connecting unit further includes a first connecting rod having a first end pivotably connected to the base about a first pivotal axis and a second end pivotably connected to a frame of the wheelchair about a second pivotal axis.

In an example, the connecting unit further includes a second connecting rod mounted above the first connecting rod. The second connecting rod has a first end pivotably connected to the base about a third pivotal axis and a second end pivotably connected to the frame of the wheelchair about a fourth pivotal axis. The third pivotal axis is located above and parallel to the first pivotal axis. The fourth pivotal axis is located above and parallel to the second pivotal axis.

In an example, the connecting unit further includes an elastic element having a first tang attached to the first connecting rod and a second tang attached to the frame. The elastic element biases the base towards the frame and biases the auxiliary wheel to come into contact with the ground, avoiding the auxiliary wheel from rotating freely above the ground. The second pivotal axis is located between the fourth pivotal axis and the second tang of the elastic element. The first tang of the elastic element is intermediate the first and second ends of the first connecting rod.

In an example, the guiding portion includes a central portion and two lateral portions respectively extending outwards and downwards from the central portion towards two sides of the base and spaced from each other in a lateral direction perpendicular to the moving direction. The two lateral portions have symmetric gradients with respect to the central portion. The rotary member rotatably abuts the central portion when the auxiliary wheel moves in the moving direction. When the auxiliary wheel deviates from the moving direction, the rotary member moves onto and presses against one of the two lateral portions and exerts a force on the ground, and the ground generates a reactive force serving as the returning force to guide the auxiliary wheel back to the moving direction.

In an example, the connecting unit further includes a limiting block mounted on a top portion of the base and a micro switch mounted on the central shaft, abutting the limiting block, and electrically connected to the power element. When the auxiliary wheel deviates from the moving direction by an angle not larger than a threshold angle, the micro switch keeps abutting the limiting block, and the power element supplies power to drive the auxiliary wheel to rotate and to move on the ground. When the auxiliary wheel deviates from the moving direction by an angle larger than the threshold angle, the micro switch is disengaged from the limiting block, and the power element does not drive the auxiliary wheel.

In an example, the central shaft includes a lower end located below the base. The wheel bracket includes a pivotal portion coupled to the lower end of the central shaft. The pivotal portion of the wheel bracket and the central shaft are jointly rotatable relative to the base about the rotating axis. The pivotal portion of the wheel bracket is pivotable relative to the central shaft about a pivotal axis intersecting with and extending perpendicularly to the rotating axis.

In an example, the wheel bracket further includes an extension extending outward from the pivotal portion in the moving direction. The extension includes a guiding seat rotatably holding the rotary member. An axle extends through the guiding seat and the rotary member in the moving direction. The rotary member is rotatable about an axis perpendicular to the rotating axis and defined by the axle. The rotary member has a top end protruding upward beyond the guiding seat and rotatably abutting the guiding portion.

The present invention will become clearer in light of the following detailed description of illustrative embodiments of this invention described in connection with the drawings.

### BRIEF DESCRIPTION OF THE DRAWINGS

FIG. 1 is a partly-exploded perspective view of a wheelchair including an auxiliary power device of an embodiment according to the present invention.
FIG. 2 is a partly-exploded perspective view of the auxiliary power device of FIG. 1.
FIG. 3 is a top view of the wheelchair of FIG 1.
FIG. 4 is a partial, side view of the wheelchair of FIG. 1.
FIG. 5 is a partial, side view illustrating operation of the wheelchair of FIG. 4, with springs uncompressed.
FIG. 6 is an enlarged, partial, rear view of the wheelchair of FIG. 1, with a rotary member abutting a guiding portion.
FIG. 7 is an enlarged view of a portion of the wheelchair of FIG. 3, illustrating operation of the auxiliary power device.

### DETAILED DESCRIPTION

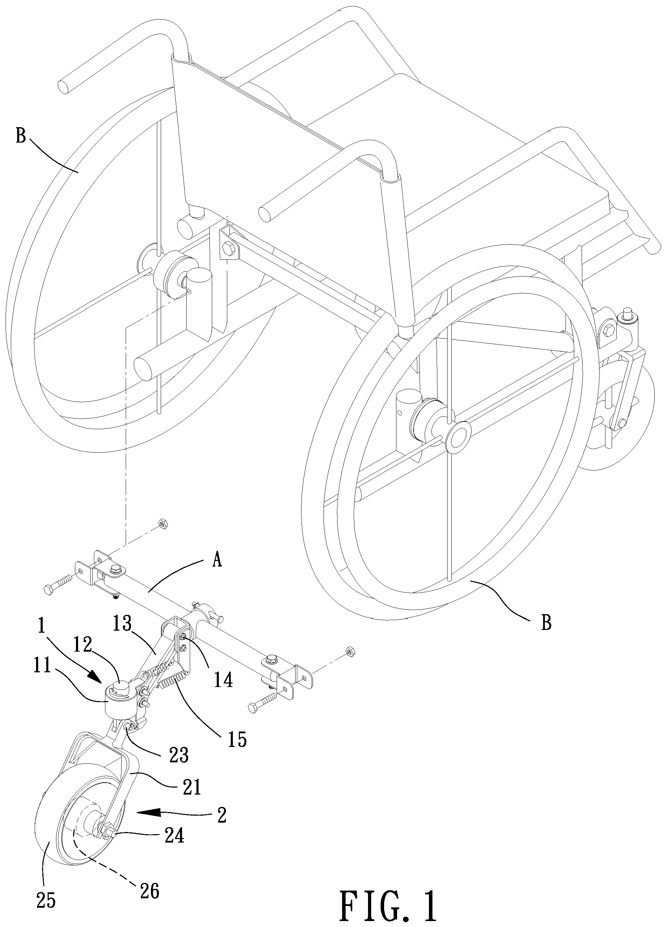

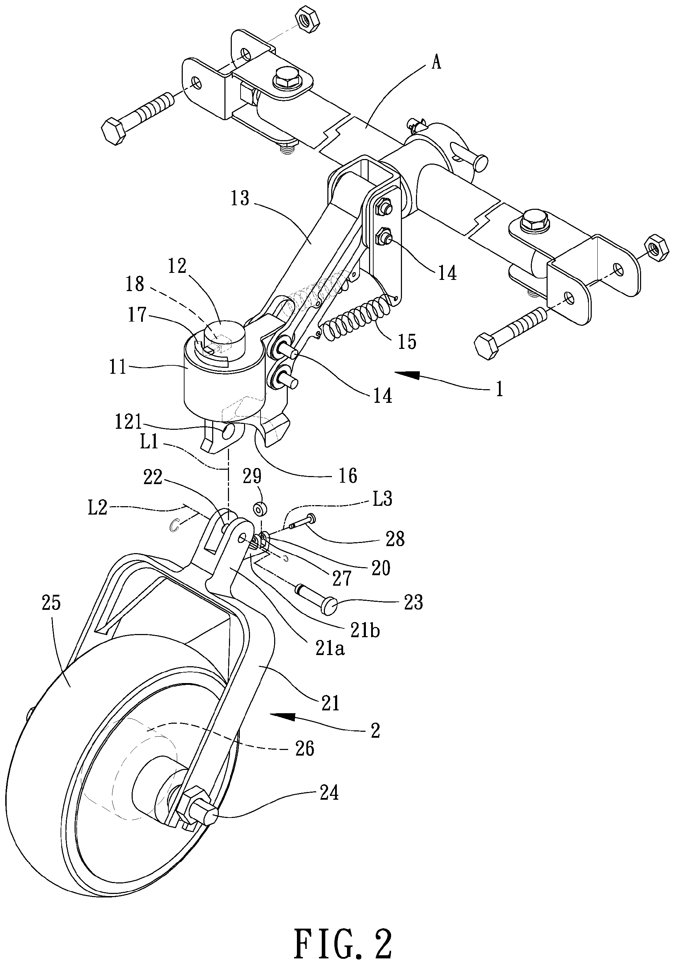

With reference to FIGS. 1 and 2, an auxiliary power device of an embodiment according to the present invention includes a connecting unit 1 and an auxiliary unit 2. The connecting unit 1 can be mounted to a frame A of a wheelchair. The auxiliary unit 2 is pivotably connected to the connecting unit 1 and assists in movement of the wheelchair.

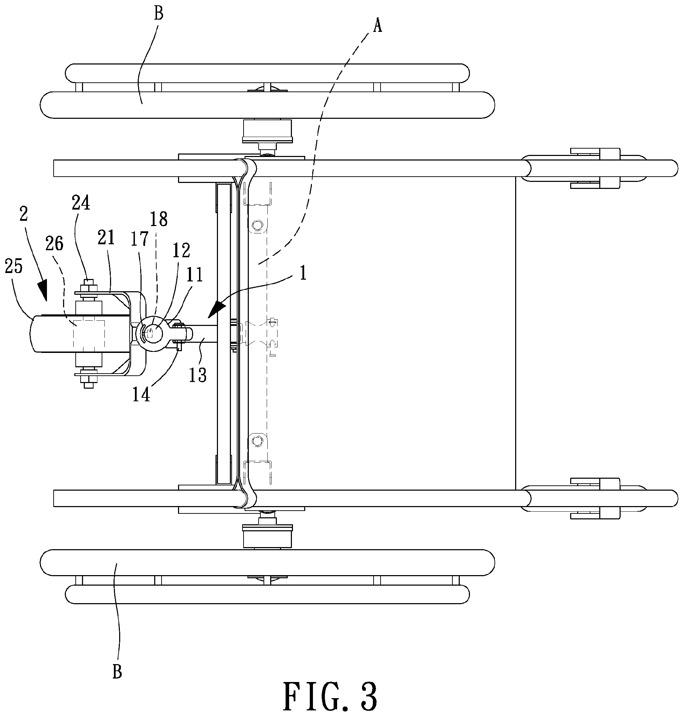

With reference to FIGS. 2-4, the connecting unit 1 includes a base 11 attached to the frame A of the wheelchair and a central shaft 12 rotatably mounted to the base 11. The central shaft 12 is rotatable relative to the base 11 about a rotating axis L1. The central shaft 12 includes a first pivotal hole 121 in a lower end thereof. Furthermore, the connecting unit 1 further includes a first connecting rod 13 having a first end pivotably connected to the base 11 about a first pivotal axis P1 by a connecting member 14 and a second end pivotably connected to the frame A of the wheelchair about a second pivotal axis P2 by another connecting member 14. In this embodiment, the connecting unit 1 further includes a second connecting rod 13 mounted above the first connecting rod 13. The second connecting rod 13 has a first end pivotably connected to the base 11 about a third pivotal axis P3 and a second end pivotably connected to the frame A of the wheelchair about a fourth pivotal axis P4. The third pivotal axis P3 is located above and parallel to the first pivotal axis P1. The fourth pivotal axis P4 is located above and parallel to the second pivotal axis P2. This forms a substantially four-bar linkage-like mechanism.

With reference to FIGS. 2, 4, and 5, the connecting unit 1 further includes at least one elastic element 15 mounted between the first connecting rod 13 and the frame A. The at least one elastic element 15 biases the base 11 towards the frame A and biases an auxiliary wheel 25 to come into contact with the ground G, avoiding the auxiliary wheel 25 from rotating freely above the ground G. In this embodiment, the connecting unit 1 includes two elastic elements 15, such as two compression springs. Each elastic element 15 is attached between one of two lateral sides of the first connecting rod 13 and the frame A. Specifically, each elastic element 15 has a first tang attached to the first connecting rod 13 and a second tang attached to the frame A. The elastic elements 15 bias the base 11 towards the frame A and bias the auxiliary wheel 25 to come into contact with the ground G. The second pivotal axis P2 is located between the fourth pivotal axis P4 and the second tang of each elastic element 15. The first tang of each elastic element 15 is intermediate the first and second ends of the first connecting rod 13.

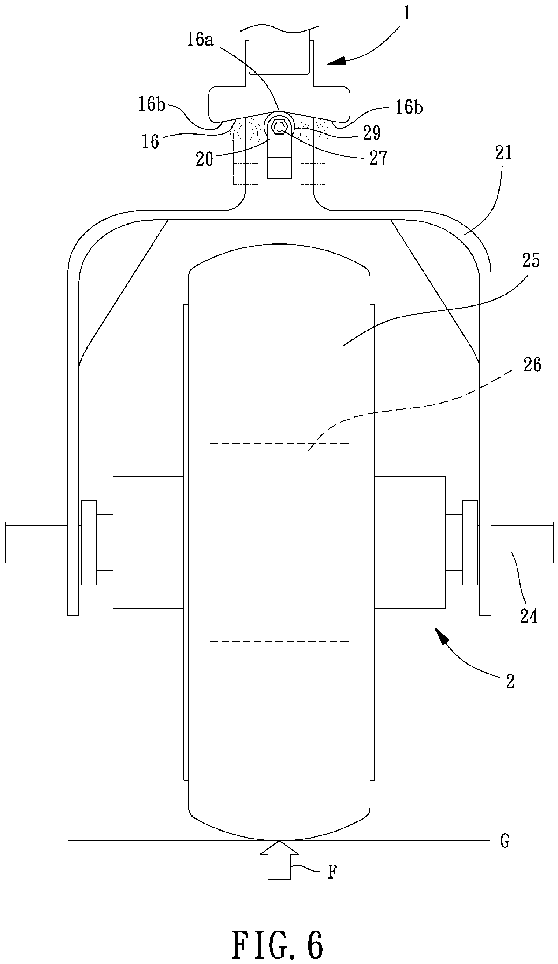

With reference to FIGS. 2 and 6, the connecting unit 1 further includes a guiding portion 16 disposed on a bottom side of the base 11 and spaced from the rotating axis L1 in a direction perpendicular to the rotating axis L1. In this embodiment, the base 11 includes a projection on an outer periphery thereof, with the projection having the bottom side on which the guiding portion 16 is formed. The guiding portion 16 includes a central portion 16a and two lateral portions 16b respectively extending outwards and downwards from the central portion 16a towards two sides of the base 11. The two lateral portions 16b are spaced from each other in a lateral direction perpendicular to the moving direction of the wheelchair. In this embodiment, the two lateral portions 16b have symmetric gradients with respect to the central portion 16a.

With reference to FIG. 2, the auxiliary unit 2 includes a wheel bracket 21 and the auxiliary wheel 25. The wheel bracket 21 is pivotably connected to the connecting unit 1. In this embodiment, the wheel bracket 21 includes a second pivotal hole 22, and a pivotal member 23 extends through the first pivotal hole 121 of the central shaft 12 and the second pivotal hole 22 of the wheel bracket 21 to connect the central shaft 12 and the wheel bracket 21. The pivotal member 23 defines a pivotal axis L2 intersecting with and extending perpendicularly to the rotating axis L1. The auxiliary wheel 25 is rotatably mounted to a lower end of the wheel bracket 21. In this embodiment, the lower end of the wheel bracket 21 has a fork, and the auxiliary wheel 25 is rotatably mounted to the fork by an engagement shaft 24. The auxiliary wheel 25 is movable on the ground G in the moving direction in which the wheelchair moves.

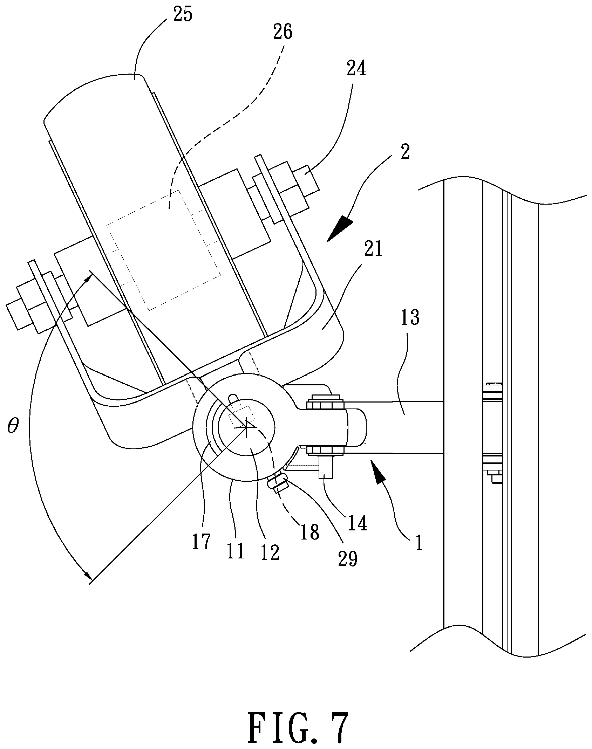

With reference to FIGS. 2, 3, and 7, a power element 26 is mounted in the auxiliary wheel 25. The power element 26 is configured to drive the auxiliary wheel 25 to rotate relative to the wheel bracket 21 and to move the auxiliary wheel 25 on the ground G in the moving direction. The connecting unit 1 further includes a limiting block 17 mounted on a top portion of the base 11 and a micro switch 18. In this embodiment, the limiting block 17 is arcuate, is coaxial to the central shaft 12, and is spaced from the central shaft 12. The micro switch 18 is mounted on the central shaft 12, abuts the limiting block 17, and is electrically connected to the power element 26. The micro switch 18 is pivotable together with the central shaft 12 within a predetermined angle θ (FIG. 7), which can be deemed as a threshold angle. When the rotating angle of the central shaft 12 relative to the base 11 is smaller than the threshold angle θ, the micro switch 18 still abuts the limiting block 17, and the power element 26 supplies power to drive the auxiliary wheel 25 to rotate and to move on the ground G. On the other hand, when the central shaft 12 rotates through an angle larger than the threshold angle θ, the micro switch 18 is disengaged from the limiting block 17, and the power element 26 does not drive the auxiliary wheel 25.

With reference to FIGS. 2, 6, and 7, the wheel bracket 21 includes a pivotal portion 21a coupled to a lower end of the central shaft 12 below the base 11. The pivotal portion 21a of the wheel bracket 21 and the central shaft 12 are jointly rotatable relative to the base 11 about the rotating axis L1. The pivotal portion 21a of the wheel bracket 21 is pivotable relative to the central shaft 12 about the pivotal axis L2 intersecting with and extending perpendicularly to the rotating axis L1.

The wheel bracket 21 further includes an extension 21b extending outward from the pivotal portion 21a in the moving direction. The extension 21b includes a guiding seat 20 rotatably holding a rotary member 29. An axle 28 extends through the guiding seat 20 and the rotary member 29 in the moving direction. The rotary member 29 is rotatable about an axis L3 perpendicular to the rotating axis L1 and defined by the axle 28. The rotary member 29 has a top end protruding upward beyond the guiding seat 20 and rotatably abutting the guiding portion 16. When the central axis 12 rotates relative to the base 10 about the rotating axis L1, the wheel bracket 21 including the rotary member 29 also rotates together with the central shaft 12.

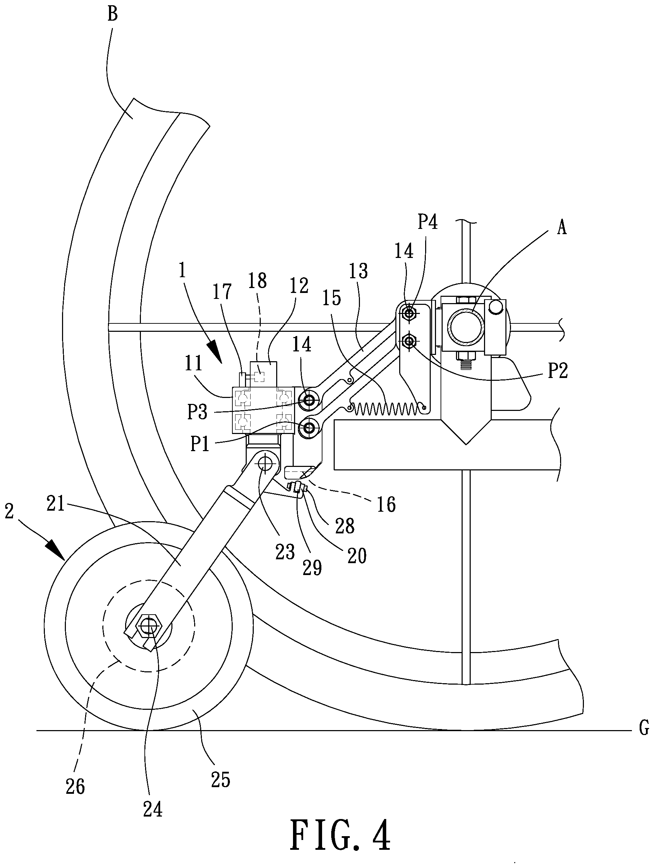

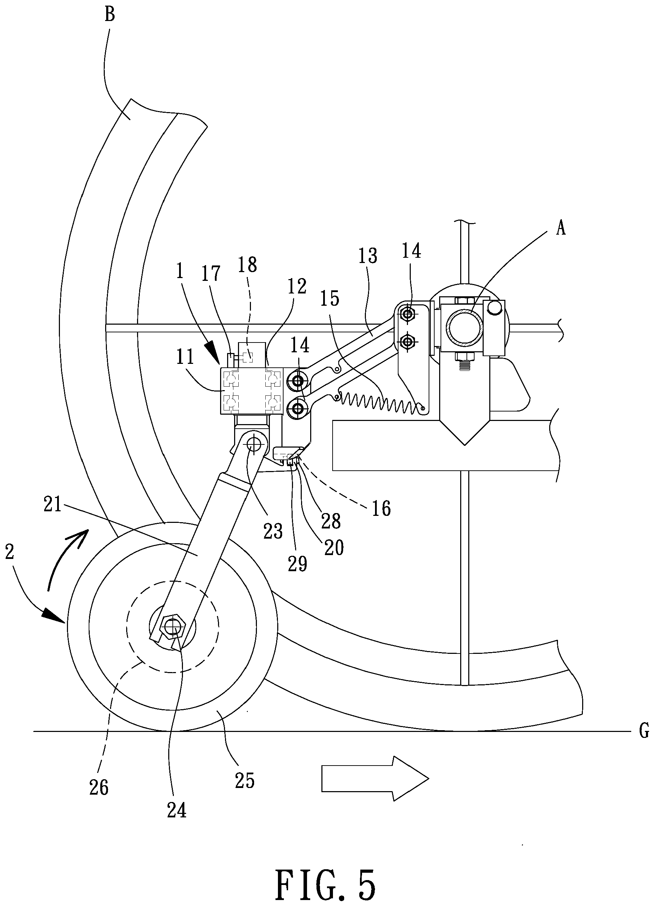

FIG. 4 shows a wheelchair having the auxiliary power device according to the present invention in a rest position. With reference to FIG. 5, in use of the wheelchair, a user pushes the wheels B of the wheelchair with a slight force to move in the moving direction indicated by the arrow. The wheel bracket 21 slightly pivots rearward, and the rotary member 29 rotatably abuts the central portion 16a of the abutting portion 16. The micro switch 18 abuts the limiting block 17, and the power element 26 supplies power to drive the auxiliary wheel 25 to rotate and to move on the ground G. Thus, the auxiliary wheel 25 assists in movement of the wheelchair.

With reference to FIG. 6, in a case of turning or moving on a bumpy road, the auxiliary wheel 25 deviates from the moving direction by an angle not larger than the threshold angle θ, when the rotating angle of the central shaft 12 and the rotary member 29 about the rotating axis L1 is smaller than the threshold angle θ, the rotary member 29 deviates leftward or rightward away from the central portion 16a of the abutting portion 16. Due to provision of the outwardly and downwardly extending lateral portions 16b onto one of the lateral portions 16b of the guiding portion 16, the rotary member 29 moves onto and presses against one of the lateral portions 16b, and the ground generates a reactive force R serving as a returning force F to guide the auxiliary wheel 25 back to the moving direction. Thus, the auxiliary wheel 25 is imparted with the returning force F to move back on the right track, providing moving stability. Furthermore, the substantially four-bar linkage-like mechanism including the first and second connecting rods 13 enables the base 11 of the connecting unit 1 to move in the vertical direction perpendicular to the ground G, further improving moving stability.

With reference to FIGS. 2 and 7, on the other hand, when the central shaft 12 rotates through an angle larger than the threshold angle θ, the micro switch 18 is disengaged from the limiting block 17, and the power element 26 does not drive the auxiliary wheel 25. Thus, the wheelchair can slow down or stop, preventing danger. The user can easily push the wheels B to turn the wheelchair. After the wheelchair is back in a straightforward direction, the rotary member 29 returns to the position rotatably abutting the central portion 16a of the guiding portion 16. At the same time, the micro switch 18 abuts the limiting block 17, and the power element 26 resumes to drive the auxiliary wheel 25 to rotate.

In view of the foregoing, the wheelchair includes the auxiliary power device according to the present invention to provide an assistant power for moving the wheelchair. The rotary member 29 and the guiding portion 16 guide the wheelchair to move in a straight line (on the right track) during turning or moving on a bumpy road, providing an automatic returning function when deviation occurs. Furthermore, when the turning angle is larger than the predetermined angle θ, the power element 26 does not supply power to the auxiliary wheel 25, such that the user can easily push the wheels B of the wheelchair for turning purposes.

Thus since the invention disclosed herein may be embodied in other specific forms, some of which forms have been indicated, the embodiments described herein are to be considered in all respects illustrative and not restrictive. The scope of the invention is to be indicated by the appended claims.

## Claims

1. An auxiliary power device for a wheelchair comprising:
a connecting unit (1) including a base (11) and a central shaft (12) rotatably mounted to the base (11) and rotatable about a rotating axis (L1), wherein the connecting unit (1) further includes a guiding portion (16) disposed on a bottom side of the base (11) and spaced from the rotating axis (L1) in a direction perpendicular to the rotating axis (L1), and wherein the base (11) is adapted to be connected to the wheelchair; and
an auxiliary unit (2) including a wheel bracket (21) and an auxiliary wheel (25), wherein the wheel bracket (21) is pivotably connected to the connecting unit (1), wherein the auxiliary wheel (25) is rotatably mounted to the wheel bracket (21) and a power element (26) is mounted in the auxiliary wheel (25), wherein the auxiliary wheel (25) is movable on a ground (G) in a moving direction in which the wheelchair moves, wherein the power element (26) is configured to drive the auxiliary wheel (25) to rotate relative to the wheel bracket (21) and to move the auxiliary wheel (25) on the ground (G) in the moving direction, wherein the auxiliary unit (2) further includes a rotary member (29) abutting the guiding portion (16), wherein when the auxiliary wheel (25) deviates from the moving direction while moving on the ground (G), the wheel bracket (21) and the central shaft (12) together rotate about the rotating axis (L1) of the central shaft (12), wherein the rotary member (29) moves along and presses against the guiding portion (16), and the auxiliary wheel (25) is imparted with a returning force (F) to move back to the moving direction.

2. The auxiliary power device for a wheel chair as claimed in claim 1, **characterized in that** the central shaft (12) of the connecting unit (1) includes a first pivotal hole (121), wherein the wheel bracket (21) of the auxiliary unit (2) includes a second pivotal hole (22), and wherein a pivotal member (23) extends through the first pivotal hole (121) of the central shaft (12) and the second pivotal hole (22) of the wheel bracket (21) to connect the central shaft (12) and the wheel bracket (21).

3. The auxiliary power device for a wheel chair as claimed in claim 1, **characterized in that** the connecting unit (1) further includes a first connecting rod (13) having a first end pivotably connected to the base (11) about a first pivotal axis (P1) and a second end pivotably connected to a frame (A) of the wheelchair about a second pivotal axis (P2).

4. The auxiliary power device for a wheel chair as claimed in claim 3, **characterized in that** the connecting unit (1) further includes at least one elastic element (15) mounted between the first connecting rod (13) and the frame (A), wherein the at least one elastic element (15) biases the base (11) towards the frame (A) and biases the auxiliary wheel (25) to come into contact with the ground (G).

5. The auxiliary power device for a wheel chair as claimed in claim 3, **characterized in that** the connecting unit (1) further includes a second connecting rod (13) mounted above the first connecting rod (13), wherein the second connecting rod (13) has a first end pivotably connected to the base (11) about a third pivotal axis (P3) and a second end pivotably connected to the frame (A) of the wheelchair about a fourth pivotal axis (P4), wherein the third pivotal axis (P3) is located above and parallel to the first pivotal axis (P1), and wherein the fourth pivotal axis (P4) is located above and parallel to the second pivotal axis (P2).

6. The auxiliary power device for a wheel chair as claimed in claim 5, **characterized in that** the connecting unit (1) further includes an elastic element (15) having a first tang attached to the first connecting rod (13) and a second tang attached to the frame (A), wherein the elastic element (15) biases the base (11) towards the frame (A) and biases the auxiliary wheel (25) to come into contact with the ground (G), wherein the second pivotal axis (P2) is located between the fourth pivotal axis (P4) and the second tang of the elastic element (15), and wherein the first tang of the elastic element (15) is intermediate the first and second ends of the first connecting rod (13).

7. The auxiliary power device for a wheel chair as claimed in claim 1, **characterized in that** the guiding portion (16) includes a central portion (16a) and two lateral portions (16b) respectively extending outwards and downwards from the central portion (16a) towards two sides of the base (11) and spaced from each other in a lateral direction perpendicular to the moving direction, wherein the two lateral portions (16b) have symmetric gradients with respect to the central portion (16a), and wherein the rotary member (29) rotatably abuts the central portion (16a) when the auxiliary wheel (25) moves in the moving direction,
wherein when the auxiliary wheel (25) deviates from the moving direction, the rotary member (29) moves onto and presses against one of the two lateral portions (16b) and exerts a force on the ground (G), and the ground (G) generates a reactive force (R) serving as the returning force to guide the auxiliary wheel (25) back to the moving direction.

8. The auxiliary power device for a wheel chair as claimed in claim 1, **characterized in that** the connecting unit (1) further includes a limiting block (17) mounted on a top portion of the base (11) and a micro switch (18) mounted on the central shaft (12), abutting the limiting block (17), and electrically connected to the power element (26),
wherein when the auxiliary wheel (25) deviates from the moving direction by an angle not larger than a threshold angle, the micro switch (18) remains abutting the limiting block (17), and the power element (26) supplies power to drive the auxiliary wheel (25) to rotate and to move on the ground (G), and
wherein when the auxiliary wheel (25) deviates from the moving direction by an angle larger than the threshold angle, the micro switch (18) is disengaged from the limiting block (17), and the power element (26) does not drive the auxiliary wheel (25).

9. The auxiliary power device for a wheel chair as claimed in claim 1, **characterized in that** the central shaft (12) includes a lower end located below the base (11), wherein the wheel bracket (21) includes a pivotal portion (21a) coupled to the lower end of the central shaft (12), wherein the pivotal portion (21a) of the wheel bracket (21) and the central shaft (12) are jointly rotatable relative to the base (11) about the rotating axis (L1), wherein the pivotal portion (21a) of the wheel bracket (21) is pivotable relative to the central shaft (12) about a pivotal axis (L2) intersecting with and extending perpendicularly to the rotating axis (L1).

10. The auxiliary power device for a wheel chair as claimed in claim 9, **characterized in that** the wheel bracket (21) further includes an extension (21b) extending outward from the pivotal portion (21a) in the moving direction, wherein the extension (21b) includes a guiding seat (20) rotatably holding the rotary member (29), wherein an axle (28) extends through the guiding seat (20) and the rotary member (29) in the moving direction, wherein the rotary member (29) is rotatable about an axis (L3) perpendicular to the rotating axis (L1) and defined by the axle (28), and wherein the rotary member (29) has a top end protruding upward beyond the guiding seat (20) and rotatably abutting the guiding portion (16).

11. A wheelchair comprising the auxiliary power device for a wheel chair as claimed in any one of claims 1-10.

## Patentansprüche

1. Hilfsantriebsvorrichtung für einen Rollstuhl, umfassend: eine Verbindungseinheit (1) mit einer Basis (11) und einer zentralen Welle (12), die drehbar an der Basis (11) angeordnet ist und um eine Drehachse (L1) drehbar ist, wobei die Verbindungseinheit (1) ferner einen Führungsabschnitt (16) umfasst, der an einer unteren Seite der Basis (11) angeordnet ist und von der Drehachse (L1) in einer Richtung senkrecht zur Drehachse (L1) beabstandet ist, und wobei die Basis (11) darauf angepasst ist, um mit dem Rollstuhl verbunden zu werden, und
eine Hilfseinheit (2) mit einer Radhalterung (21) und einem Hilfsrad (25), wobei die Radhalterung (21) schwenkbar mit der Verbindungseinheit (1) verbunden ist, wobei das Hilfsrad (25) drehbar an der Radhalterung (21) gelagert ist und ein Antriebselement (26) in dem Hilfsrad (25) angeordnet ist, wobei das Hilfsrad (25) auf einem Untergrund (G) in einer Bewegungsrichtung bewegbar ist, in der sich der Rollstuhl bewegt, wobei das Antriebselement (26) darauf ausgelegt ist, das Hilfsrad (25) anzutreiben, sich relativ zu der Radhalterung (21) zu drehen und das Hilfsrad (25) an dem Untergrund (G) in die Bewegungsrichtung zu bewegen, wobei die Hilfseinheit (2) ferner ein Drehelement (29) aufweist, das an den Führungsabschnitt (16) anliegt, wobei, wenn das Hilfsrad (25) von der Bewegungsrichtung abweicht, während es sich auf dem Untergrund (G) bewegt, die Radhalterung (21) und die zentrale Welle (12) zusammen um die Drehachse (L1) der zentralen Welle (12) rotieren, wobei sich das Drehelement (29) mitbewegt und gegen den Führungsabschnitt (16) drückt und das Hilfsrad (25) mit einer Rückstellkraft (F) beeinflusst wird, um sich in die Bewegungsrichtung zurückzubewegen.

2. Hilfsantriebsvorrichtung für einen Rollstuhl gemäß Anspruch 1, **dadurch gekennzeichnet, dass** die zentrale Welle (12) der Verbindungseinheit (1) ein erstes Schwenkloch (121) aufweist, wobei die Radhalterung (21) der Hilfseinheit (2) ein zweites Schwenkloch (22) aufweist, und wobei sich ein Schwenkelement (23) durch das erste Schwenkloch (121) der zentralen Welle (12) und das zweite Schwenkloch (22) der Radhalterung (21) erstreckt, um die zentrale Welle (12) und die Radhalterung (21) zu verbinden.

3. Hilfsantriebsvorrichtung für einen Rollstuhl gemäß Anspruch 1, **dadurch gekennzeichnet, dass** die Verbindungseinheit (1) ferner eine erste Verbindungsstange (13) umfasst, die ein erstes Ende umfasst, das um eine erste Schwenkachse (P1) schwenkbar mit der Basis (11) verbunden ist, und ein zweites Ende, das um eine zweite Schwenkachse (P2) schwenkbar mit einem Rahmen (A) des Rollstuhls verbunden ist.

4. Hilfsantriebsvorrichtung für einen Rollstuhl gemäß Anspruch 3, **dadurch gekennzeichnet, dass** die Verbindungseinheit (1) ferner mindestens ein elastisches Element (15) umfasst, das zwischen der ersten Verbindungsstange (13) und dem Rahmen (A) angeordnet ist, wobei das mindestens eine elastische Element (15) die Basis (11) in Richtung des Rahmens (A) vorspannt und das Hilfsrad (25) vorspannt, um mit dem Untergrund (G) in Kontakt zu kommen.

5. Hilfsantriebsvorrichtung für einen Rollstuhl gemäß Anspruch 3, **dadurch gekennzeichnet, dass** die Verbindungseinheit (1) ferner eine zweite Verbindungsstange (13) umfasst, die über der ersten Verbindungsstange (13) angeordnet ist, wobei die zweite Verbindungsstange (13) ein erstes Ende aufweist, das um eine dritte Schwenkachse (P3) schwenkbar mit der Basis (11) verbunden ist, und ein zweites Ende, das um eine vierte Schwenkachse (P4) schwenkbar mit dem Rahmen (A) des Rollstuhls verbunden ist, wobei die dritte Schwenkachse (P3) oberhalb und parallel zur ersten Schwenkachse (P1) angeordnet ist und wobei die vierte Schwenkachse (P4) oberhalb und parallel zur zweiten Schwenkachse (P2) angeordnet ist.

6. Hilfsantriebsvorrichtung für einen Rollstuhl gemäß Anspruch 5, **dadurch gekennzeichnet, dass** die Verbindungseinheit (1) ferner ein elastisches Element (15) mit einem an der ersten Verbindungsstange (13) angeordneten ersten Zapfen und einem an dem Rahmen (A) anordneten zweiten Zapfen umfasst, wobei das elastische Element (15) die Basis (11) in Richtung des Rahmens (A) vorspannt und das Hilfsrad (25) vorspannt, um mit dem Untergrund (G) in Kontakt zu kommen, wobei die zweite Schwenkachse (P2) zwischen der vierten Schwenkachse (P4) und dem zweiten Zapfen des elastischen Elements (15) angeordnet ist und wobei der erste Zapfen des elastischen Elements (15) zwischen dem ersten und dem zweiten Ende der ersten Verbindungsstange (13) ist.

7. Hilfsantriebsvorrichtung für einen Rollstuhl gemäß Anspruch 1, **dadurch gekennzeichnet, dass** der Führungsabschnitt (16) einen zentralen Abschnitt (16a) und zwei laterale Abschnitte (16b) umfasst, die sich jeweils von dem zentralen Abschnitt (16a) nach außen und unten zu zwei Seiten der Basis (11) erstrecken und in einer lateralen Richtung senkrecht zur Bewegungsrichtung voneinander beabstandet sind, wobei die beiden lateralen Abschnitte (16b) symmetrische Steigungen in Bezug auf den zentralen Abschnitt (16a) aufweisen, und wobei das Drehelement (29) drehbar an den zentralen Abschnitt (16a) anliegt, wenn sich das Hilfsrad (25) in der Bewegungsrichtung bewegt,
wobei, wenn das Hilfsrad (25) von der Bewegungsrichtung abweicht, das Drehelement (29) sich auf einen der beiden lateralen Abschnitte (16b) bewegt und gegen diesen drückt und eine Kraft auf den Untergrund (G) ausübt, und der Untergrund (G) eine Reaktionskraft (R) erzeugt, die als Rückstellkraft dient, um das Hilfsrad (25) zurück in die Bewegungsrichtung zu führen.

8. Hilfsantriebsvorrichtung für einen Rollstuhl gemäß Anspruch 1, **dadurch gekennzeichnet, dass** die Verbindungseinheit (1) ferner einen Begrenzungsblock (17) aufweist, der an einem oberen Abschnitt der Basis (11) angeordnet ist und einen Mikroschalter (18), der an der zentralen Welle (12) angeordnet ist, an dem Begrenzungsblock (17) anliegt und elektrisch mit dem Antriebselement (26) verbunden ist,
wobei, wenn das Hilfsrad (25) um einen Winkel, der nicht größer als ein Schwellenwinkel ist, von der Bewegungsrichtung abweicht, der Mikroschalter (18) weiterhin an dem Begrenzungsblock (17) anliegt, und das Antriebselement (26) Leistung liefert, um das Hilfsrad (25) anzutreiben, um sich zu drehen und sich auf dem Untergrund zu bewegen (G), und wobei, wenn das Hilfsrad (25) von der Bewegungsrichtung um einen Winkel abweicht, der größer als der Schwellenwinkel ist, der Mikroschalter (18) vom Begrenzungsblock (17) gelöst wird, und das Leistungselement (26) das Hilfsrad (25) nicht antreibt.

9. Hilfsantriebsvorrichtung für einen Rollstuhl gemäß Anspruch 1, **dadurch gekennzeichnet, dass** die zentrale Welle (12) ein unter der Basis (11) angeordnetes unteres Ende aufweist, wobei die Radhalterung (21) einen mit dem unteren Ende der zentralen Welle (12) gekoppelten Schwenkabschnitt (21a) aufweist, wobei der Schwenkabschnitt (21a) der Radhalterung (21) und die zentrale Welle (12) gemeinsam relativ zur Basis (11) um die Drehachse (L1) drehbar sind, wobei der Schwenkabschnitt (21a) der Radhalterung (21) relativ zu der zentralen Welle (12) um eine Schwenkachse (L2) schwenkbar ist, die die Drehachse (L1) schneidet und sich senkrecht zu dieser erstreckt.

10. Hilfsantriebsvorrichtung für einen Rollstuhl gemäß Anspruch 9, **dadurch gekennzeichnet, dass** die Radhalterung (21) ferner eine Verlängerung (21b) umfasst, die sich von dem Schwenkabschnitt (21a) in der Bewegungsrichtung nach außen erstreckt, wobei die Verlängerung (21b) einen Führungssitz umfasst (20), der das Drehelement (29) drehbar hält, wobei sich eine Achse (28) durch den Führungssitz (20) und das Drehelement (29) in die Bewegungsrichtung erstreckt, wobei das Drehelement (29) um eine Achse drehbar ist (L3), die senkrecht zu der Drehachse (L1) ist und durch die Achse (28) definiert ist, und wobei das Drehelement (29) ein oberes Ende aufweist, das über den Führungssitz (20) nach oben vorsteht und drehbar an dem Führungsabschnitt (16) anliegt.

11. Rollstuhl, der die Hilfsantriebsvorrichtung für einen Rollstuhl gemäß einem der Ansprüche 1 bis 10 umfasst.

## Revendications

1. Dispositif d'alimentation auxiliaire pour un fauteuil roulant comprenant:
une unité de raccordement (1) incluant une base (11) et un arbre central (12) monté rotatif sur la base (11) et pouvant tourner autour de l'axe de rotation (L1),
dans lequel l'unité de raccordement (1) inclut en outre une portion de guidage (16) disposée sur un côté inférieur de la base (11) et espacée par rapport à l'axe de rotation (L1) dans une direction perpendiculaire à l'axe de rotation (L1), et dans lequel la base (11) est adaptée pour être raccordée au fauteuil roulant; et
une unité auxiliaire (2) incluant un support de roue (21) et une roue auxiliaire (25), dans lequel le support de roue (21) est connecté de manière pivotante à l'unité de raccordement (1), dans lequel la roue auxiliaire (25) est montée rotative sur le support de roue (21) et un élément d'alimentation (26) est monté dans la roue auxiliaire (25), dans lequel la roue auxiliaire (25) est mobile sur un sol (G) dans une direction de déplacement dans laquelle le fauteuil roulant se déplace,
dans lequel l'élément d'alimentation (26) est configuré pour entraîner la roue auxiliaire (25) à tourner par rapport au support de roue (21) et de déplacer la roue auxiliaire (25) sur le sol (G) dans la direction de déplacement, dans lequel l'unité auxiliaire (2) inclut en outre une pièce rotative (29) venant en butée contre la portion de guidage (16), dans lequel lorsque la roue auxiliaire (25) dévie de la direction de déplacement tout en se déplaçant sur le sol (G), le support de roue (21) et l'arbre central (12) tournent ensemble autour de l'axe de rotation (L1) de l'arbre central (12), dans lequel la pièce rotative (29) se déplace le long de et appuie contre la portion de guidage (16), et la roue auxiliaire (25) est dotée d'une force de retour (F) pour revenir à la direction de déplacement.

2. Dispositif d'alimentation auxiliaire pour un fauteuil roulant selon la revendication 1, **caractérisé en ce que** l'arbre central (12) de l'unité de raccordement (1) inclut un premier trou de pivotement (121), dans lequel le support de roue (21) de l'unité auxiliaire (2) inclut un second trou de pivotement (22), et dans lequel une pièce de pivotement (23) s'étend à travers le premier trou de pivotement (121) de l'arbre central (12) et le second trou de pivotement (22) du support de roue (21) pour raccorder l'arbre central (12) et le support de roue (21).

3. Dispositif d'alimentation auxiliaire pour un fauteuil roulant selon la revendication 1, **caractérisé en ce que** l'unité de raccordement (1) inclut en outre une première tige de raccordement (13) présentant une première extrémité raccordée de manière pivotante à la base (11) autour d'un premier axe de pivotement (P1) et une seconde extrémité raccordée de manière pivotante à un cadre (A) du fauteuil roulant autour d'un deuxième axe de pivotement (P2).

4. Dispositif d'alimentation auxiliaire pour un fauteuil roulant selon la revendication 3, **caractérisé en ce que** l'unité de raccordement (1) inclut en outre au moins un élément élastique (15) monté entre la première tige de raccordement (13) et le cadre (A), dans lequel l'au moins un élément élastique (15) déforme la base (11) en direction du cadre (A) and déforme la roue auxiliaire (25) pour entrer en contact avec le sol (G).

5. Dispositif d'alimentation auxiliaire pour un fauteuil roulant selon la revendication 3, **caractérisé en ce que** l'unité de raccordement (1) inclut en outre une seconde tige de raccordement (13) montée au-dessus de la première tige de raccordement (13), dans lequel la seconde tige de raccordement (13) présente une première extrémité raccordée de manière pivotante à la base (11) autour d'un troisième axe de pivotement (P3) et une seconde extrémité raccordée de manière pivotante au cadre (A) du fauteuil roulant autour d'un quatrième axe de pivotement (P4), dans lequel le troisième axe de pivotement (P3) est situé au-dessus de et de façon parallèle au premier axe de pivotement (P1), et dans lequel le quatrième axe de pivotement (P4) est situé au-dessus de et de façon parallèle au deuxième axe de pivotement (P2).

6. Dispositif d'alimentation auxiliaire pour un fauteuil roulant selon la revendication 5, **caractérisé en ce que** l'unité de raccordement (1) inclut en outre un élément élastique (15) présentant une première languette attachée à la première tige de raccordement (13) et une seconde languette attachée au cadre (A), dans lequel l'élément élastique (15) déforme la base (11) en direction du cadre (A) et déforme la roue auxiliaire (25) de façon à ce qu'elle entre en contact avec le sol (G), dans lequel le deuxième axe de pivotement (P2) est situé entre le quatrième axe de pivotement (P4) et la seconde languette de l'élément élastique (15), et dans lequel la première languette de l'élément élastique (15) est intermédiaire aux première et seconde extrémités de la première tige de raccordement (13).

7. Dispositif d'alimentation auxiliaire pour un fauteuil roulant selon la revendication 1, **caractérisé en ce que** la portion de guidage (16) inclut une portion centrale (16a) et deux portions latérales (16b) s'étendant respectivement vers l'extérieur et vers le bas à partir de la portion centrale (16a) en direction de deux côtés de la base (11) et espacés les uns des autres dans une direction latérale perpendiculaire à la direction de déplacement, dans lequel les deux portions latérales (16b) présentent des pentes symétriques par rapport à la portion centrale (16a), et dans lequel la pièce rotative (29) vient en butée de manière rotative contre la portion centrale (16a) lorsque la roue auxiliaire (25) se déplace dans la direction de déplacement,
dans lequel lorsque la roue auxiliaire (25) dévie de la direction de déplacement, la pièce rotative (29) se déplace sur et appuie contre une des deux portions latérales (16b) et exerce une force sur la sol (G), et le sol (G) génère une force de réaction (R) faisant office de force de retour pour guider la roue auxiliaire (25) de manière à ce qu'elle retourne dans la direction de déplacement.

8. Dispositif d'alimentation auxiliaire pour un fauteuil roulant selon la revendication 1, **caractérisé en ce que** l'unité de raccordement (1) inclut en outre un bloc de limitation (17) monté sur une portion supérieure de la base (11) et un micro-commutateur (18) monté sur l'arbre central (12) venant en butée contre le bloc de limitation (17), et raccordé électriquement à l'élément d'alimentation (26), dans lequel lorsque la roue auxiliaire (25) dévie de la direction de déplacement selon un angle inférieur à un angle seuil, le micro-commutateur (18) reste en butée contre le bloc de limitation (17), et l'élément d'alimentation (26) fournit de l'énergie pour entraîner la roue auxiliaire (25) à tourner et à se déplacer sur le sol (G), et
dans lequel lorsque la roue auxiliaire (25) dévie de la direction de déplacement selon un angle supérieur à un angle seuil, le micro-commutateur (18) se désengage du bloc de limitation (17), et l'élément d'alimentation (26) n'entraîne pas la roue auxiliaire (25).

9. Dispositif d'alimentation auxiliaire pour un fauteuil roulant selon la revendication 1, **caractérisé en ce que** l'arbre central (12) inclut une extrémité inférieure située en dessous de la base (11), dans lequel le support de roue (21) inclut une portion de pivotement (21a) couplée à l'extrémité inférieure de l'arbre central (12), dans lequel la portion de pivotement (21a) du support de roue (21) et l'arbre central (12) sont rotatifs conjointement par rapport à la base (11) autour de l'axe de rotation (L1), dans lequel la portion de pivotement (21a) du support de roue (21) peut pivoter par rapport à l'arbre central (12) autour de l'axe de pivotement (L2) coupant et s'étendant perpendiculairement à l'axe de rotation (L1).

10. Dispositif d'alimentation auxiliaire pour un fauteuil roulant selon la revendication 9, **caractérisé en ce que** le support de roue (21) inclut en outre une extension (21b) s'étendant vers l'extérieur à partir de la portion de pivotement (21a) dans la direction de déplacement, dans lequel l'extension (21b) inclut un siège de guidage (20) soutenant de manière rotative la pièce rotative (29), dans lequel un axe (28) s'étend à travers le siège de guidage (20) et la pièce rotative (29) dans la direction de déplacement, dans lequel la pièce rotative (29) peut tourner autour d'un avec (L3) perpendiculaire à l'axe de rotation (L1) et est définie par l'axe (28), et dans lequel la pièce rotative (29) présente une extrémité supérieure faisant saillie vers le haut au-delà du siège de guidage (20) et venant en butée de manière rotative contre la pièce de guidage (16).

11. Fauteuil roulant comprenant le dispositif d'alimentation auxiliaire pour un fauteuil roulant selon l'une quelconque des revendications 1 à 10.
